# EUROPÄISCHE PATENTSCHRIFT

(11) **EP 2 403 648 B1**
(45) Veröffentlichungstag und Bekanntmachung des Hinweises auf die Patenterteilung: **04.09.2013**
(21) Anmeldenummer: 10706003.0
(22) Anmeldetag: 03.03.2010
(51) Int. Cl.: B03C 1/015

(54) **MAGNETISCHE TRENNUNG VON BUNTMETALLERZEN DURCH MEHRSTUFIGE KONDITIONIERUNG**
MAGNETIC SEPARATION OF NONFERROUS METAL ORES BY MEANS OF MULTI-STAGE CONDITIONING
SÉPARATION MAGNÉTIQUE DE MINERAIS MÉTALLIQUES NON FERREUX PAR CONDITIONNEMENT EN PLUSIEURS ÉTAPES

(30) Priorität: 04.03.2009 EP 09154283
(43) Veröffentlichungstag der Anmeldung: 11.01.2012
(73) Patentinhaber: BASF SE, 67056 Ludwigshafen (DE); Siemens Aktiengesellschaft, 80333 München (DE)
(72) Erfinder: DOMKE, Imme, 68165 Mannheim (DE); MICHAILOVSKI, Alexej, 67061 Ludwigshafen (DE); MRONGA, Norbert, 69221 Dossenheim (DE); HARTMANN, Werner, 91085 Weisendorf (DE); KRIEGLSTEIN, Wolfgang, 90574 Roßtal (DE); DANOV, Vladimir, 91058 Erlangen (DE)
(74) Vertreter: Steinbusch, Daniel
(86) Internationale Anmeldenummer: PCT/EP2010/052668
(87) Internationale Veröffentlichungsnummer: WO 2010/100181

(56) Entgegenhaltungen:
- WO-A1-2009/010422
- US-A- 3 926 789
- US-A- 4 834 898

## Beschreibung

Die vorliegende Erfindung betrifft ein Verfahren zum Abtrennen wenigstens eines ersten Stoffes aus einer Mischung enthaltend diesen wenigstens einen ersten Stoff und wenigstens einen zweiten Stoff, wobei der erste Stoff zunächst zu seiner Hydrophobierung mit einer oberflächenaktiven Substanz in Kontakt gebracht wird, diese Mischung weiter in Kontakt mit mindestens einem Magnetpartikel gebracht wird, so dass sich der Magnetpartikel und der hydrophobisierte erste Stoff anlagern, dieses Agglomerat durch die Anwendung eines Magnetfeldes abgetrennt wird, die zurückbleibende Mischung erneut mit einer oberflächenaktiven Substanz und Magnetpartikeln behandelt wird, um weiteren ersten Stoff abzutrennen.

Insbesondere betrifft die vorliegende Erfindung ein Verfahren zur Anreicherung von Werterzen in Gegenwart der Gangart.

Verfahren zum Abtrennen von Werterzen aus Mischungen enthaltend diese sind aus dem Stand der Technik bereits bekannt.

WO 02/0066168 A1 betrifft ein Verfahren zur Abtrennung von Werterzen aus Mischungen enthaltend diese, in dem Suspensionen oder Aufschlämmungen dieser Mischungen mit Partikeln, welche magnetisch und/oder schwimmfähig in wässrigen Lösungen sind, behandelt werden. Nach Zugabe der magnetischen und/oder schwimmfähigen Partikel wird ein Magnetfeld angelegt, so dass die Agglomerate von der Mischung abgetrennt werden. Der Grad der Anbindung der magnetischen Partikel an die Werterze und die Stärke der Bindung ist jedoch nicht ausreichend, um das Verfahren mit genügend hoher Ausbeute und Effektivität durchzuführen.

US 4,657,666 offenbart ein Verfahren zur Anreicherung von Werterzen, wobei das in der Gangart vorliegende Werterz mit magnetischen Partikeln umgesetzt wird, wodurch sich aufgrund der hydrophoben Wechselwirkungen Agglomerate bilden. Die magnetischen Partikel werden durch Behandlung mit hydrophoben Verbindungen auf der Oberfläche hydrophobiert, so dass eine Anbindung an das Werterz erfolgt. Die Agglomerate werden dann durch ein magnetisches Feld von der Mischung abgetrennt. Das genannte Dokument offenbart auch, dass die Werterze mit einer oberflächenaktivierenden Lösung von 1 % Natrium-ethylxanthogenat behandelt werden, bevor das magnetische Teilchen zugefügt wird. Eine Trennung von Werterz und Magnetpartikel erfolgt bei diesem Verfahren durch das Zerstören der oberflächenaktivierenden Substanz, die in Form der oberflächenaktivierenden Lösung auf das Werterz aufgebracht worden ist. Weiter werden bei diesem Verfahren lediglich C₄-Hydrophobisierungsmittel für das Erz eingesetzt.

US 4,834,898 offenbart ein Verfahren zum Abtrennen nicht magnetischer Materialien durch Inkontaktbringen dieser mit magnetischen Reagenzien, welche mit zwei Schichten aus oberflächenaktiven Substanzen umhüllt sind. US 4,834,898 offenbart des Weiteren, dass die Oberflächenladung der nicht magnetischen Partikel, welche abgetrennt werden sollen, durch verschiedene Arten und Konzentrationen von Elektrolytreagenzien beeinflusst werden kann. Beispielsweise wird die Oberflächenladung durch Zugabe von multivalenten Anionen, beispielsweise Tripolyphosphationen, verändert.

S. R. Gray, D. Landberg, N. B. Gray, Extractive Metallurgy Conference, Perth, 2 - 4 October 1991, Seiten 223 - 226 offenbart ein Verfahren zur Rückgewinnung von kleinen Goldpartikeln durch Inkontaktbringen der Partikel mit Magnetit. Vor dem Inkontaktbringen werden die Goldteilchen mit Kalium-amylxanthogenat behandelt. Ein Verfahren zum Abtrennen der Goldteilchen von wenigstens einem hydrophilen Stoff wird in diesem Dokument nicht offenbart.

WO 2007/008322 A1 offenbart einen magnetischen Partikel, welche auf der Oberfläche hydrophobiert ist, zur Abtrennung von Verunreinigungen von mineralischen Substanzen durch magnetische Separationsverfahren. Gemäß WO 2007/008322 A1 kann der Lösung oder Dispersion ein Dispergiermittel, ausgewählt aus Natriumsilikat, Natriumpolyacrylat oder Natriumhexametaphosphat zugegeben werden.

WO 2009/010422 A1 offenbart ein Verfahren zum Abtrennen wenigstens eines hydrophoben Stoffes aus einer Mischung umfassend diesen wenigstens einen hydrophoben Stoff und wenigstens einen hydrophilen Stoff, sowie die Verwendung einer festen hydrophoben Oberfläche zum Abtrennen wenigstens eines hydrophoben Stoffes aus der oben genannten Mischung. Das Verfahren gemäß WO 2009/010422 A1 umfasst die Schritte (A) Herstellen einer Aufschlämmung oder Dispersion der zu behandelnden Mischung in wenigstens einem geeigneten Dispersionsmittel, (B) Inkontaktbringen der Aufschlämmung oder Dispersion aus Schritt (A) mit wenigstens einer festen, hydrophoben Oberfläche zur Anbindung des abzutrennenden, wenigstens einen hydrophoben Stoffes an diese, (C) Entfernen der wenigstens einen festen, hydrophoben Oberfläche, an der der wenigstens eine hydrophobe Stoff angebunden ist aus Schritt (B), aus der Aufschlämmung oder Dispersion, in der der wenigstens eine hydrophile Stoff enthalten ist und (D) Abtrennen des wenigstens einen hydrophoben Stoffes von der festen, hydrophoben Oberfläche. Feste, hydrophobe Oberflächen sind gemäß WO 2009/010422 A1 beispielsweise eine Platte oder ein Laufband, oder die Summe der Oberflächen vieler beweglicher Teilchen, beispielsweise die einzelnen Oberflächen einer Vielzahl von Kugeln. Magnetpartikel werden in WO 2009/010422 A1 als hydrophobe Oberflächen nicht genannt. Des Weiteren wird in WO 2009/010422 A1 nicht offenbart, dass die Agglomerate aus dem wenigstens einen ersten Stoff und den Magnetpartikeln durch Anlegen eines magnetischen Feldes gemäß Schritt (D) abgetrennt werden.

US 3,926,789 offenbart ein Verfahren zur magnetischen Abtrennung von teilchenförmigen Mischungen. Mischungen von nicht-magnetischen oder para-magnetischen Materialien können durch Magnetifizierung der Oberflächen einer oder mehrerer Komponenten dieser Mischungen und Durchführen einer magnetischen Trennung getrennt werden. Dazu wird eine magnetische Flüssigkeit selektiv auf eine oder mehrere Komponenten der teilchenförmigen Mischung aufgebracht, so dass diese magnetisch werden und durch ein magnetisches Feld abgetrennt werden können. Ein gemahlenes Erz wird konditioniert, gewöhnlich durch chemische Behandlung, um die Oberflächeneigenschaften einer oder mehrerer Komponenten des Erzes zu modifizieren. Die Aufschlämmung wird mit der magnetischen Flüssigkeit in Kontakt gebracht. US 3,926,789 offenbart nicht die Konditionierung des zu trennenden Gemisches mit oberflächenaktiven Substanzen. Des Weiteren offenbart US 3,926,789 nicht, dass zunächst ein Teil des abzutrennenden ersten Stoffes aus der Mischung abgetrennt wird, um eine Mischung M1 zu erhalten, mit der das Trennverfahren wiederholt wird, um eine Mischung M2 zu erhalten.

Aufgabe der vorliegenden Erfindung ist es, ein Verfahren bereitzustellen, durch das wenigstens ein erster Stoff aus Mischungen enthaltend wenigstens einen ersten Stoff und wenigstens einen zweiten Stoff effizient abgetrennt werden können. Des Weiteren ist es eine Aufgabe der vorliegenden Erfindung, die abzutrennenden ersten Partikel so zu behandeln, dass das Anlagerungsprodukt zwischen magnetischem Partikel und erstem Stoff genügend stabil ist, um eine hohe Ausbeute an erstem Stoff bei der Abtrennung zu gewährleisten. Eine weitere Aufgabe der vorliegenden Erfindung ist es, ein Verfahren bereitzustellen, welches sich dadurch auszeichnet, dass möglichst wenig oberflächenaktive Substanz eingesetzt werden muss, und gleichzeitig der wenigstens eine erste Stoff zu einem hohen Anteil abgetrennt werden kann.

Diese Aufgaben werden gelöst durch ein Verfahren zum Abtrennen wenigstens eines ersten Stoffes aus einer Mischung enthaltend diesen wenigstens einen ersten Stoff und wenigstens einen zweiten Stoff, wenigstens umfassend die folgenden Schritte:
(A) Inkontaktbringen der Mischung enthaltend wenigstens einen ersten Stoff und wenigstens einen zweiten Stoff mit wenigstens einer oberflächenaktiven Substanz, gegebenenfalls in Gegenwart wenigstens eines Dispersionsmittels, wobei die oberflächenaktive Substanz an den wenigstens einen ersten Stoff anbindet,
(B) gegebenenfalls Zugabe wenigstens eines Dispersionsmittels zu der in Schritt (A) erhaltenen Mischung, um eine Dispersion zu erhalten,
(C) Behandeln der Dispersion aus Schritt (A) oder (B) mit wenigstens einem hydrophoben Magnetpartikel, so dass sich der wenigstens eine erste Stoff, an den die wenigstens eine oberflächenaktive Substanz angebunden ist, und der wenigstens eine Magnetpartikel anlagern,
(D) Abtrennen des Anlagerungsproduktes aus Schritt (C) von der Mischung durch Anlegen eines magnetischen Feldes, um das Anlagerungsprodukt und eine an Anlagerungsprodukt verarmte Mischung M1 zu erhalten,
(E) erneutes Inkontaktbringen von Mischung M1 aus Schritt (D) mit wenigstens einer oberflächenaktiven Substanz, wobei die oberflächenaktive Substanz an den wenigstens einen ersten Stoff, der in Mischung M1 aus Schritt (D) noch vorhanden ist, anbindet,
(F) gegebenenfalls Zugabe wenigstens eines Dispersionsmittels zu der in Schritt (E) erhaltenen Mischung, um eine Dispersion zu erhalten,
(G) Behandeln der Dispersion aus Schritt (E) oder (F) mit wenigstens einem hydrophoben Magnetpartikel, so dass sich der wenigstens eine erste Stoff, an den die wenigstens eine oberflächenaktive Substanz angebunden ist, und der wenigstens eine Magnetpartikel anlagern,
(H) Abtrennen des Anlagerungsproduktes aus Schritt (G) von der Mischung durch Anlegen eines magnetischen Feldes, um das Anlagerungsprodukt und eine an Anlagerungsprodukt verarmte Mischung M2 zu erhalten und
(I) gegebenenfalls Wiederholen der Schritte (E) bis (H).

Das erfindungsgemäße Verfahren dient bevorzugt zum Abtrennen wenigstens eines ersten, hydrophoben Stoffes aus einer Mischung umfassend diesen wenigstens einen ersten, hydrophoben Stoff und wenigstens einen zweiten, hydrophilen Stoff.

Im Rahmen der vorliegenden Erfindung bedeutet "hydrophob", dass das entsprechende Teilchen nachträglich durch Behandlung mit der wenigstens einen oberflächenaktiven Substanz hydrophobiert sein kann. Es ist auch möglich, dass ein an sich hydrophobes Teilchen durch Behandlung mit der wenigstens einen oberflächenaktiven Substanz zusätzlich hydrophobiert wird.

"Hydrophob" bedeutet im Rahmen der vorliegenden Erfindung, dass die Oberfläche einer entsprechenden "hydrophoben Substanz" bzw. einer "hydrophobisierten Substanz" einen Kontaktwinkel von > 90° mit Wasser gegen Luft aufweist. "Hydrophil" bedeutet im Rahmen der vorliegenden Erfindung, dass die Oberfläche einer entsprechenden "hydrophilen Substanz" einen Kontaktwinkel von < 90° mit Wasser gegen Luft aufweist.

In einer bevorzugten Ausführungsform des erfindungsgemäßen Verfahrens ist der wenigstens eine erste Stoff wenigstens eine hydrophobe Metallverbindung oder Kohle, und der wenigstens eine zweite Stoff ist bevorzugt wenigstens eine hydrophile Metallverbindung.

Somit ist der wenigstens eine abzutrennende erste Stoff bevorzugt eine Metallverbindung ausgewählt aus der Gruppe der sulfidischen Erze, der oxidischen und/oder carbonathaltigen Erze, beispielsweise Azurit [Cu₃(CO₃)₂(OH)₂], oder Malachit [Cu₂[(OH)₂|CO₃]]), oder der Edelmetalle und deren Verbindungen, an die sich selektiv eine oberflächenaktive Verbindung unter Erzeugung von hydrophoben Oberflächeneigenschaften anlagern kann.

Die wenigstens eine hydrophile Metallverbindung ist bevorzugt ausgewählt aus der Gruppe bestehend aus oxidischen und hydroxidischen Metallverbindungen, beispielsweise Siliziumdioxid SiO₂, Silikate, Alumosilikate, beispielsweise Feldspate, beispielsweise Albit Na(Si₃Al)O₈, Glimmer, beispielsweise Muskovit KAl₂[(OH,F)₂AlSi₃O₁₀], Granate (Mg, Ca, Fe^{II})₃(Al, Fe^{III})₂(SiO₄)₃, Al₂O₃, FeO(OH), FeCO₃, Fe₂O₃, Fe₃O₄ und weitere verwandte Mineralien und Mischungen davon.

Beispiele für erfindungsgemäß einsetzbare sulfidische Erze sind z.B. ausgewählt aus der Gruppe der Kupfererze bestehend aus Covellit CuS, Molybdän(IV)-sulfid, Chalkopyrit (Kupferkies) CuFeS₂, Bornit Cu₅FeS₄, Chalkozyt (Kupferglanz) Cu₂S und Mischungen davon. In einer bevorzugten Ausführungsform liegen in der erfindungsgemäß zu behandelnden Mischung zwei oder mehr erste Stoffe vor, beispielsweise Mischungen enthaltend zwei oder mehr der oben genannten sulfidischen Kupfer-Erze. Geeignete erfindungsgemäß einsetzbare oxidische Metallverbindungen sind bevorzugt ausgewählt aus der Gruppe bestehend aus Siliziumdioxid SiO₂, Silikate, Alumosilikate, beispielsweise Feldspate, beispielsweise Albit Na(Si₃Al)O₈, Glimmer, beispielsweise Muskovit KAl₂[(OH,F)₂AlSi₃O₁₀], Granate (Mg, Ca, Fe^{II})₃(Al, Fe^{III})₂(SiO₄)₃ und weitere verwandte Mineralien und Mischungen davon.

In dem erfindungsgemäßen Verfahren werden demnach bevorzugt unbehandelte ErzMischungen eingesetzt, welche aus Minenvorkommen gewonnen werden.

In einer bevorzugten Ausführungsform des erfindungsgemäßen Verfahrens liegt die Mischung enthaltend wenigstens einen ersten Stoff und wenigstens einen zweiten Stoff in Schritt (A) in Form von Partikeln mit einer Größe von 100 nm bis 100 µm vor, siehe beispielsweise US 5,051,199. In einer bevorzugten Ausführungsform wird diese Partikelgröße durch Mahlen erhalten. Geeignete Verfahren und Vorrichtungen sind dem Fachmann bekannt, beispielsweise Nassmahlen in einer Kugelmühle. Somit ist eine bevorzugte Ausführungsform des erfindungsgemäßen Verfahrens dadurch gekennzeichnet, dass die Mischung enthaltend wenigstens einen ersten Stoff und wenigstens einen zweiten Stoff vor oder während Schritt (A) zu Partikeln mit einer Größe von 100 nm bis 100 µm vermahlen wird. Bevorzugt einsetzbare Erzmischungen weisen einen Gehalt an sulfidischen Mineralien von mindestens 0,4 Gew.-%, besonders bevorzugt mindestens 10 Gew.-%, auf.

Beispiele für sulfidische Mineralien, die in den erfindungsgemäß einsetzbaren Mischungen vorliegen, sind die oben genannten. Zusätzlich können in den Mischungen auch Sulfide anderer Metalle als Kupfer vorliegen, beispielsweise Sulfide von Eisen, Blei, Zink oder Molybdän, d.h. FeS/FeS₂, PbS, ZnS oder MoS₂. Des Weiteren können in den erfindungsgemäß zu behandelnden Erzmischungen oxidische Verbindungen von Metallen und Halbmetallen, beispielsweise Silikate oder Borate oder andere Salze von Metallen und Halbmetallen, beispielsweise Phosphate, Sulfate oder Oxide/Hydroxide/Carbonate und weitere Salze vorliegen, beispielsweise Azurit [Cu₃(CO₃)₂(OH)₂], Malachit [Cu₂[(OH)₂(CO₃)]], Baryt (BaSO₄), Monacit ((La-Lu)PO₄). Weitere Beispiele für den wenigstens einen ersten Stoff, der durch das erfindungsgemäße Verfahren abgetrennt wird, sind Edelmetalle. beispielsweise Au, Pt, Pd, Rh etc. bevorzugt im gediegenen Zustand.

Eine typischerweise eingesetzte Erzmischung, die mit dem erfindungsgemäßen Verfahren getrennt werden kann, hat die folgende Zusammensetzung: ca. 30 Gew.-% SiO₂, ca. 10 Gew.-% Na(Si₃Al)O₈, ca. 3 Gew.-% Cu₂S, ca. 1 Gew.-% MoS₂, Rest Chrom-, Eisen-, Titan- und Magnesiumoxide.

Die einzelnen Schritte des erfindungsgemäßen Verfahrens werden im Folgenden detailliert beschrieben:

### Schritt (A):

Schritt (A) des erfindungsgemäßen Verfahrens umfasst das Inkontaktbringen der Mischung enthaltend wenigstens einen ersten Stoff und wenigstens einen zweiten Stoff mit wenigstens einer oberflächenaktiven Substanz, gegebenenfalls in Gegenwart wenigstens eines Dispersionsmittels, wobei die oberflächenaktive Substanz selektiv an den wenigstens einen ersten Stoff anbindet.

Geeignete und bevorzugte erste und zweite Stoffe sind oben genannt.

Im Rahmen der vorliegenden Erfindung bedeutet "oberflächenaktive Substanz" eine Substanz, die in der Lage ist, die Oberfläche des abzutrennenden Teilchens in Anwesenheit der anderen Teilchen, die nicht abgetrennt werden sollen, so zu ändern, dass eine Anlagerung eines hydrophoben Teilchens durch hydrophobe Wechselwirkungen zu Stande kommt. Erfindungsgemäß einsetzbare oberflächenaktive Substanzen lagern sich an den mindestens einen ersten Stoff an und bewirken dadurch eine geeignete Hydrophobizität des ersten Stoffes.

Bevorzugt wird in dem erfindungsgemäßen Verfahren eine oberflächenaktive Substanz der allgemeinen Formel (I)

A-Z (I)

eingesetzt, die an den wenigstens einen ersten Stoff anbindet, worin
A ausgewählt aus linearem oder verzweigtem C₃-C₃₀-Alkyl, C₃-C₃₀-Heteroalkyl, gegebenenfalls substituiertes C₆-C₃₀-Aryl, gegebenenfalls substituiertes C₆-C₃₀-Heteroalkyl, C₆-C₃₀-Aralkyl ist und
Z eine Gruppe ist, mit der die Verbindung der allgemeinen Formel (I) an den wenigstens einen hydrophoben Stoff anbindet.

In einer besonders bevorzugten Ausführungsform ist A ein lineares oder verzweigtes C₄-C₁₂-Alkyl, ganz besonders bevorzugt ein lineares C₄- bis C₈-Alkyl. Erfindungsgemäß gegebenenfalls vorhandene Heteroatome sind ausgewählt aus N, O, P, S und Halogenen wie F, Cl, Br und I.

In einer weiteren bevorzugten Ausführungsform ist A bevorzugt ein lineares oder verzweigtes, bevorzugt lineares, C₆-C₂₀-Alkyl. Weiterhin ist A bevorzugt ein verzweigtes C₆-C₁₄-Alkyl, wobei der wenigstens eine Substituent, bevorzugt mit 1 bis 6 Kohlenstoffatomen, bevorzugt in 2-Position, vorliegt, beispielsweise 2-Ethylhexyl und/oder 2-Propylheptyl.

In einer weiteren besonders bevorzugten Ausführungsform ist Z ausgewählt aus der Gruppe bestehend aus anionischen Gruppen -(X)ₙ-PO₃²⁻, -(X)ₙ-PO₂S²⁻, -(X)ₙ-POS₂²⁻,-(X)ₙ-PS₃²⁻, -(X)ₙ-PS₂⁻, -(X)ₙ-POS⁻, -(X)ₙ-PO₂⁻, -(X)ₙ-PO₃²⁻ -(X)ₙ-CO₂-, -(X)ₙ-CS₂⁻, -(X)ₙ-COS-, -(X)ₙ-C(S)NHOH, -(X)ₙ-S⁻ mit X ausgewählt aus der Gruppe bestehend aus O, S, NH, CH₂ und n = 0, 1 oder 2, mit gegebenenfalls Kationen ausgewählt aus der Gruppe bestehend aus Wasserstoff, NR₄⁺ mit R gleich unabhängig voneinander Wasserstoff und/oder C₁-C₈-Alkyl, Alkali- oder Erdalkalimetallen. Die genannten Anionen und die entsprechenden Kationen bilden erfindungsgemäß neutral geladene Verbindungen der allgemeinen Formel (I).

Bedeutet in den genannten Formeln n = 2, so liegen zwei gleiche oder unterschiedliche, bevorzugt gleiche, Gruppen A an eine Gruppe Z gebunden vor.

In einer besonders bevorzugten Ausführungsform werden Verbindungen eingesetzt, ausgewählt aus der Gruppe bestehend aus Xanthaten A-O-CS₂⁻, Dialkyldithiophosphaten (A-O)₂-PS₂⁻, Dialkyldithioposphinaten (A)₂-PS₂⁻ und Mischungen davon, wobei A unabhängig voneinander ein lineares oder verzweigtes, bevorzugt lineares, C₆-C₂₀-Alkyl, beispielsweise n-Octyl, oder ein verzweigtes C₆-C₁₄-Alkyl, wobei die Verzweigung bevorzugt in 2-Position vorliegt, beispielsweise 2-Ethylhexyl und/oder 2-Propylheptyl, ist. Als Gegenionen liegen in diesen Verbindungen bevorzugt Kationen ausgewählt aus der Gruppe bestehend aus Wasserstoff, NR₄⁺ mit R gleich unabhängig voneinander Wasserstoff und/oder C₁-C₈-Alkyl, Alkali- oder Erdalkalimetallen, insbesondere Natrium oder Kalium, vor.

Ganz besonders bevorzugte Verbindungen der allgemeinen Formel (I) sind ausgewählt aus der Gruppe bestehend aus Natrium- oder Kalium-n-octylxanthat, Natrium- oder Kalium-butylxanthat, Natrium- oder Kalium-di-n-octyldithiophosphinat, Natrium- oder Kalium-di-n-octyldithiophosphat, und Mischungen dieser Verbindungen.

Für Edelmetalle, beispielsweise Au, Pd, Rh etc., sind besonders bevorzugte oberflächenaktive Substanzen Mono-, Di- und Trithiole oder 8-Hydroxychinoline, beispielsweise beschrieben in EP 1200408 B1.

Für Metalloxide, beispielsweise FeO(OH), Fe₃O₄, ZnO etc., Carbonate, beispielsweise Azurit [Cu(CO₃)₂(OH)₂], Malachit [Cu₂[(OH)₂CO₃]], sind besonders bevorzugte oberflächenaktive Substanzen Octylphosphonsäure (OPS), (EtO)₃Si-A, (MeO)₃Si-A, mit den oben genannten Bedeutungen für A.

Für Metallsulfide, beispielsweise Cu₂S, MoS₂, etc., sind besonders bevorzugte oberflächenaktive Substanzen Thiole, Xanthate, Hydroxamate und Thiocarbamate.

In einer weiteren bevorzugten Ausführungsform des erfindungsgemäßen Verfahrens bedeutet Z -(X)ₙ-CS₂⁻, -(X)ₙ-PO₂⁻ oder -(X)ₙ-S⁻ mit X gleich O und n gleich 0 oder 1 und einem Kation ausgewählt aus Wasserstoff, Natrium oder Kalium. Ganz besonders bevorzugte oberflächenaktive Substanzen sind 1-Octanthiol, Kalium-n-oktylxanthat, Kalium-butylxanthat, Octylphosphonsäure oder eine Verbindung der folgenden Formel (IV)

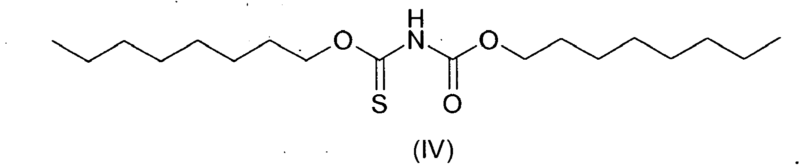

In einer besonders bevorzugten Ausführungsform werden bei dem Verfahren Thiole, Xanthate, Hydroxamate und Thiocarbamate mit C₁-C₈-Alkylresten für den ersten Konditionierungsschritt verwendet. In einer ganz besonders bevorzugten Ausführungsform werden C₂- und C₄-Xanthate verwendet. In einer weiteren ganz besonders bevorzugten Ausführungsform werden Mischungen von C₂- und C₈-Xanthaten eingesetzt.

Erfindungsgemäß können in den beiden Hydrophobierungsschritten (A) und (E) die gleichen oder unterschiedliche oberflächenaktive Substanzen verwendet werden.

Insbesondere bei Vorliegen von zwei oder mehr ersten Stoffen, insbesondere Werterzen, in der erfindungsgemäß zu behandelnden Mischung werden mit dieser ersten Konditionierung bevorzugt die sulfidischen Kupfermineralien hydrophobisiert, die eine hohe Affinität zu der oberflächenaktiven Substanz aufweisen. Diese können dann nach Zugabe des wenigstens einen Magnetpartikels magnetisch abgetrennt werden. Zurück bleiben bevorzugt Mineralien mit einer weniger hohen Affinität zu der oberflächenaktiven Substanz. Diese werden dann mit einem zweiten Konditionierungsschritt (Schritt (E)), gegebenenfalls mit einer anderen oberflächenaktiven Substanz, hydrophobisiert. Der Vorteil des erfindungsgemäßen mindestens zweistufigen Verfahrens besteht darin, dass, bevorzugt bei Vorliegen von zwei oder mehr ersten Stoffen, in einem Schritt einer der vorliegenden ersten Stoffen mit einer für diesen ersten Stoff besonders affinen oberflächenaktiven Substanz behandelt und abgetrennt wird. In einem zweiten Schritt wird dann ein anderer erster Stoff mit einer anderen für diesen weiteren ersten Stoff besonders affinen oberflächenaktiven Substanz behandelt und auch abgetrennt. Erfindungsgemäß kann in beiden Schritten auch die gleiche oberflächenaktive Substanz verwendet werden. In beiden Ausführungsformen des erfindungsgemäßen Verfahrens ist die Gesamtmenge an oberflächenaktiver Substanz im Allgemeinen geringer, verglichen mit einem einstufigen Verfahren.

Das Inkontaktbringen in Schritt (A) des erfindungsgemäßen Verfahrens kann durch alle dem Fachmann bekannte Verfahren geschehen. Schritt (A) kann in Substanz oder in Dispersion, bevorzugt in Suspension, besonders bevorzugt in wässriger Suspension, durchgeführt werden.

In einer Ausführungsform des erfindungsgemäßen Verfahrens wird Schritt (A) in Substanz, d.h. in Abwesenheit eines Dispersionsmittels, durchgeführt.

Beispielsweise werden die zu behandelnde Mischung und die wenigstens eine oberflächenaktive Substanz ohne weiteres Dispersionsmittel in den entsprechenden Mengen zusammen gegeben und vermischt. Geeignete Mischungsapparaturen sind dem Fachmann bekannt, beispielsweise Mühlen, wie Kugelmühle.

In einer weiteren bevorzugten Ausführungsform wird Schritt (A) in einer Dispersion, bevorzugt in Suspension, durchgeführt. Als Dispersionsmittel sind alle Dispersionsmittel geeignet, in denen die Mischung aus Schritt (A) nicht vollständig löslich ist. Geeignete Dispersionsmittel zur Herstellung der Aufschlämmung oder Dispersion gemäß Schritt (B) des erfindungsgemäßen Verfahrens sind ausgewählt aus der Gruppe bestehend aus Wasser, wasserlöslichen organischen Verbindungen, beispielsweise Alkoholen mit 1 bis 4 Kohlenstoffatomen, und Mischungen davon.

In einer besonders bevorzugten Ausführungsform ist das Dispersionsmittel in Schritt (A) Wasser.

Schritt (A) des erfindungsgemäßen Verfahrens wird im Allgemeinen bei einer Temperatur von 1 bis 80 °C, bevorzugt bei 20 bis 40 °C, besonders bevorzugt bei Umgebungstemperatur durchgeführt. Der pH-Wert wird je nach zu behandelnder Mischung eingestellt, bevorzugt wird ein leicht alkalischer pH-Wert eingestellt, beispielsweise pH 8 bis 10, insbesondere pH 9.

Die wenigstens eine oberflächenaktive Substanz wird in Schritt (A) im Allgemeinen in einer Menge von 10 bis 350 g / t, bevorzugt 50 bis 180 g / t, jeweils bezogen auf die gesamte zu behandelnde Mischung, eingesetzt. Die besonders bevorzugt eingesetzte Menge hängt jeweils von der Art der zu behandelnden Mischung ab. Behandelt man z. B. porphyrisches Erz mit einem Gehalt von 0,7 Gew.-% Cu, welches hauptsächliches als sulfidisches Kupfer, z. B. als Bornit, Chalcocit oder Chalcopyrit vorliegt, ist die bevorzugte Menge an z. B. C₂-/C₈-Xanthat 110 bis 150 g / t, besonders bevorzugt 130 g / t.

### Schritt (B):

Der optionale Schritt (B) des erfindungsgemäßen Verfahrens umfasst die Zugabe wenigstens eines Dispersionsmittels zu der in Schritt (A) erhaltenen Mischung, um eine Dispersion zu erhalten.

Die in Schritt (A) erhaltene Mischung enthält in einer Ausführungsform, falls Schritt (A) in Substanz durchgeführt wird, wenigstens einen ersten Stoff, der an der Oberfläche mit wenigstens einer oberflächenaktiven Substanz modifiziert worden ist, und wenigstens einen zweiten Stoff. Wird Schritt (A) in Substanz durchgeführt, wird Schritt (B) des erfindungsgemäßen Verfahrens durchgeführt, d.h. wenigstens ein geeignetes Dispersionsmittel wird zu der in Schritt (A) erhaltenen Mischung zugegeben, um eine Dispersion zu erhalten.

In der Ausführungsform, in der Schritt (A) des erfindungsgemäßen Verfahrens in Dispersion durchgeführt wird, wird Schritt (B) nicht durchgeführt. Es ist jedoch auch bei dieser Ausführungsform möglich, Schritt (B) durchzuführen, d.h. weiteres Dispersionsmittel zuzugeben, um eine Dispersion mit einer niedrigeren Konzentration zu erhalten.

Als geeignete Dispersionsmittel sind alle Dispersionsmittel geeignet, die bereits bezüglich Schritt (A) genannt worden sind. In einer besonders bevorzugten Ausführungsform ist das Dispersionsmittel in Schritt (B) Wasser.

In Schritt (B) wird somit entweder die in Substanz vorliegende Mischung aus Schritt (A) in eine Dispersion überführt, oder die bereits in Dispersion vorliegende Mischung aus Schritt (A) wird durch Zugabe von Dispersionsmittel in eine Dispersion niedrigerer Konzentration überführt.

Im Allgemeinen kann die Menge an Dispersionsmittel, zugegeben in Schritt (A) und/oder Schritt (B) erfindungsgemäß so gewählt werden, dass eine Dispersion erhalten wird, welche gut rührbar und/oder förderbar ist. In einer bevorzugten Ausführungsform beträgt die Menge an zu behandelnder Mischung bezogen auf die gesamte Aufschlämmung oder Dispersion bis 100 Gew.-%, besonders bevorzugt 0,5 bis 10 Gew.-%.

In einer bevorzugten Ausführungsform des erfindungsgemäßen Verfahrens wird Schritt (B) nicht durchgeführt, sondern Schritt (A) wird in wässriger Dispersion durchgeführt, so dass in Schritt (A) direkt eine Mischung in wässriger Dispersion erhalten wird, die die richtige Konzentration aufweist, um in Schritt (C) des erfindungsgemäßen Verfahrens eingesetzt zu werden.

Die Zugabe von Dispersionsmittel in Schritt (B) des erfindungsgemäßen Verfahrens kann erfindungsgemäß nach allen dem Fachmann bekannten Verfahren erfolgen.

### Schritt (C):

Schritt (C) des erfindungsgemäßen Verfahrens umfasst das Behandeln der Dispersion aus Schritt (A) oder (B) mit wenigstens einem hydrophoben Magnetpartikel, so dass sich der wenigstens eine in Schritt (A) hydrophobierte erste Stoff, an den die wenigstens eine oberflächenaktive Substanz angebunden ist, und der wenigstens eine Magnetpartikel anlagern.

In Schritt (C) des erfindungsgemäßen Verfahrens können alle dem Fachmann bekannten magnetischen Substanzen und Stoffe eingesetzt werden. In einer bevorzugten Ausführungsform ist der wenigstens eine Magnetpartikel ausgewählt aus der Gruppe bestehend aus magnetischen Metallen, beispielsweise Eisen, Cobalt, Nickel und Mischungen davon, ferromagnetischen Legierungen von magnetischen Metallen, beispielsweise NdFeB, SmCo und Mischungen davon, magnetischen Eisenoxiden, beispielsweise Magnetit, Maghemit, kubischen Ferriten der allgemeinen Formel (II)

M²⁺ₓFe²⁺ ₁₋ₓFe³⁺₂O₄ (II)

mit
- M: ausgewählt aus Co, Ni, Mn, Zn und Mischungen davon und
- x: ≤ 1,
hexagonalen Ferriten, beispielsweise Barium- oder Strontiumferrit MFe₆O₁₉ mit M = Ca, Sr, Ba, und Mischungen davon. Die Magnetpartikel können zusätzlich eine äußere Schicht, beispielsweise aus SiO₂, aufweisen.

In einer besonders bevorzugten Ausführungsform der vorliegenden Anmeldung ist der wenigstens eine magnetische Partikel Magnetit oder Kobaltferrit Co²⁺ ₓFe²⁺ ₁₋ₓFe³⁺ ₂O₄ mit x ≤ 1.

In einer bevorzugten Ausführungsform liegen die in Schritt (C) des erfindungsgemäßen Verfahrens eingesetzten Magnetpartikel in einer Größe von 100 nm bis 100 µm, besonders bevorzugt 1 bis 50 µm, vor. Die Magnetpartikel können vor Verwendung in Schritt (C) nach dem Fachmann bekannten Verfahren in die entsprechende Größe überführt werden, beispielsweise durch Mahlen. Weiter können die Partikel, hergestellt durch eine Fällungsreaktion, durch Einstellen der Reaktionsparameter (z. B. pH, Reaktionsdauer, Temperatur) auf diese Partikelgröße gebracht werden.

In einer weiteren bevorzugten Ausführungsform ist der wenigstens eine magnetische Partikel an der Oberfläche mit wenigstens einer hydrophoben Verbindung hydrophobiert. Bevorzugt ist die hydrophobe Verbindung ausgewählt aus Verbindungen der allgemeinen Formel (III)

B-Y (III),

worin
- B: ausgewählt ist aus linearem oder verzweigtem C₃-C₃₀-Alkyl, C₃-C₃₀-Heteroalkyl, gegebenenfalls substituiertes C₆-C₃₀-Aryl, gegebenenfalls substituiertes C₆-C₃₀-Heteroalkyl, C₆-C₃₀-Aralkyl und
- Y: eine Gruppe ist, mit der die Verbindung der allgemeinen Formel (III) an den wenigstens einen magnetischen Partikel anbindet.

In einer besonders bevorzugten Ausführungsform ist B ein lineares oder verzweigtes C₆-C₁₈-Alkyl, bevorzugt lineares C₈-C₁₂-Alkyl, ganz besonders bevorzugt ein lineares C₁₂-Alkyl. Erfindungsgemäß gegebenenfalls vorhandene Heteroatome sind ausgewählt aus N, O, P, S und Halogenen wie F, Cl, Br und I.

In einer weiteren besonders bevorzugten Ausführungsform ist Y ausgewählt aus der Gruppe bestehend aus -(X)ₙ-SiHal₃, -(X)ₙ-SiHHal₂, -(X)ₙ-SiH₂Hal mit Hal gleich F, Cl, Br, I, und anionischen Gruppen wie -(X)ₙ-SiO₃³⁻, -(X)ₙ-CO₂⁻, -(X)ₙ-PO₃²⁻, -(X)ₙPO₂S²⁻,-(X)ₙ-POS₂²⁻, -(X)ₙ-PS₃²⁻, -(X)ₙ-PS₂⁻, -(X)ₙ-POS⁻, -(X)ₙ-PO₂⁻, -(X)ₙ-CO₂⁻, -(X)ₙ-CS₂⁻ , -(X)ₙ-COS⁻, -(X)ₙ-C(S)NHOH, -(X)ₙ-S⁻ mit X = O, S, NH, CH₂ und n = 0, 1 oder 2, und gegebenenfalls Kationen ausgewählt aus der Gruppe bestehen aus Wasserstoff, NR₄⁺ mit R gleich unabhängig voneinander Wasserstoff und/oder C₁-C₈-Alkyl, Alkali-, Erdalkalimetallen oder Zink, des Weiteren -(X)ₙ-Si(OZ)₃ mit n = 0, 1 oder 2 und Z = Ladung, Wasserstoff oder kurzkettiger Alkylrest.

Bedeutet in den genannten Formeln n = 2, so liegen zwei gleiche oder unterschiedliche, bevorzugt gleiche, Gruppen B an eine Gruppe Y gebunden vor.

Ganz besonders bevorzugte hydrophobierende Substanzen der allgemeinen Formel (III) sind Alkyltrichlorsilane (Alkylgruppe mit 6-12 Kohlenstoffatomen), Alkyltrimethoxysilane (Alkylgruppe mit 6-12 Kohlenstoffatomen), Octylphosphonsäure, Laurinsäure, Ölsäure, Stearinsäure oder Mischungen davon.

Das Behandeln der Lösung oder Dispersion mit wenigstens einem hydrophoben Magnetpartikel in Schritt (C) des erfindungsgemäßen Verfahrens kann nach allen dem Fachmann bekannten Verfahren erfolgen.

In einer bevorzugten Ausführungsform wird der wenigstens eine magnetische Partikel in einem geeigneten Dispersionsmittel dispergiert.

Als geeignete Dispersionsmittel sind alle Dispersionsmittel geeignet, in denen der wenigstens eine Magnetpartikel nicht vollständig löslich ist. Geeignete Dispersionsmittel zur Dispergierung gemäß Schritt (C) des erfindungsgemäßen Verfahrens sind ausgewählt aus der Gruppe bestehend aus Wasser, wasserlöslichen organischen Verbindungen und Mischungen davon, besonders bevorzugt Wasser. Besonders bevorzugt wird in Schritt (C) das gleiche Dispersionsmittel eingesetzt wie in Schritt (B).

Im Allgemeinen kann die Menge an Dispersionsmittel zum Vordispergieren der Magnetpartikel erfindungsgemäß so gewählt werden, dass eine Aufschlämmung oder Dispersion erhalten wird, welche gut rührbar und/oder förderbar ist. In einer bevorzugten Ausführungsform beträgt die Menge an zu behandelnder Mischung bezogen auf die gesamte Aufschlämmung oder Dispersion bis 60 Gew.-%.

Die Dispersion der Magnetpartikel kann erfindungsgemäß nach allen dem Fachmann bekannten Verfahren hergestellt werden..In einer bevorzugten Ausführungsform werden die zu dispergierenden Magnetpartikel und die entsprechende Menge Dispersionsmittel bzw. Dispersionsmittelgemisch in einem geeigneten Reaktor, beispielsweise einem Glasreaktor, zusammengegeben und mit dem Fachmann bekannten Vorrichtungen gerührt, beispielsweise in einer Glaswanne mit einem mechanisch betriebenen Flügelrührer, beispielsweise bei einer Temperatur von 1 bis 80 °C, bevorzugt bei Raumtemperatur.

Das Behandeln der Dispersion aus Schritt (B) mit wenigstens einem hydrophoben Magnetpartikel geschieht im Allgemeinen so, dass beide Komponenten durch dem Fachmann bekannte Methoden zusammengegeben werden. In einer bevorzugten Ausführungsform wird eine Dispersion des wenigstens einen magnetischen Partikels zu der zuvor mit wenigstens einer oberflächenaktiven Substanz behandelten Mischung gegeben. In einer weiteren Ausführungsform kann der magnetische Partikel in fester Form zu einer Dispersion der zu behandelnden Mischung gegeben werden. In einer weiteren bevorzugten Ausführungsform liegen beide Komponenten in dispergierter Form vor.

Schritt (C) wird im Allgemeinen bei einer Temperatur von 1 bis 80 °C, bevorzugt 10 bis 30 °C durchgeführt.

In Schritt (C) lagert sich der wenigstens eine magnetische Partikel an den hydrophoben Stoff der zu behandelnden Mischung an. Die zwischen den beiden Komponenten bestehende Bindung basiert auf hydrophoben Wechselwirkungen. Zwischen dem wenigstens einen magnetischen Partikel und dem hydrophilen Anteil der Mischung findet im Allgemeinen keine bindende Wechselwirkung statt, so dass zwischen diesen Komponenten keine Anlagerung stattfindet. Nach Schritt (C) liegen somit in der Mischung Anlagerungsprodukte des wenigstens eine hydrophoben Stoffes und des wenigstens einen magnetischen Partikels neben dem wenigstens einen hydrophilen Stoff vor.

Im Allgemeinen wird so viel magnetischer Partikel in Schritt (C) zugegeben, dass eine möglich vollständige Abtrennung des wenigstens einen ersten Stoffes erfolgt. Das Gewichtsverhältnis zwischen dem in der Mischung vorliegenden wenigstens einen ersten Stoff und dem wenigstens einen Magnetpartikel beträgt im Allgemeinen 0,1:1 bis 1:20. Das genaue Verhältnis hängt jeweils von der Mischung ab, die magnetisch getrennt werden soll, sowie von der magnetischen Trennapparatur, z. B. bezüglich Strömungsgeschwindigkeiten, Feststoffgehalt der Pulpe etc.

### Schritt (D):

Schritt (D) des erfindungsgemäßen Verfahrens umfasst das Abtrennen des Anlagerungsproduktes aus Schritt (C) von der Mischung durch Anlegen eines magnetischen Feldes, um das Anlagerungsprodukt und eine an Anlagerungsprodukt verarmte Mischung M1 zu erhalten.

In der Ausführungsform, in der in der zu behandelnden Mischung zwei oder mehr erste Stoffe vorliegen, enthält Mischung M1 vor allem die Bestandteile der Ausgangsmischung, die eine geringe Affinität zu der in Schritt (A) verwendeten oberflächenaktiven Substanz aufweisen. In der Ausführungsform, in der in der zu behandelnden Mischung ein erster Stoff vorliegt, enthält Mischung M1 vor allem übrig gebliebenen ersten Stoff, der in den Schritten (A) bis (C) noch nicht abgetrennt worden ist.

Schritt (D) kann in einer bevorzugten Ausführungsform durchgeführt werden, indem ein Dauermagnet in den Reaktor eingebracht wird, in dem sich die Mischung aus Schritt (C) befindet. In einer bevorzugten Ausführungsform befindet sich zwischen Dauermagnet und zu behandelnder Mischung eine Trennwand aus nicht magnetischem Material, beispielsweise die Glaswand des Reaktors. In einer weiteren bevorzugten Ausführungsform des erfindungsgemäßen Verfahrens wird in Schritt (D) ein elektrisch schaltbarer Magnet eingesetzt, der nur dann magnetisch ist, wenn ein elektrischer Strom fließt. Geeignete Vorrichtungen sind dem Fachmann bekannt.

Schritt (D) des erfindungsgemäßen Verfahrens kann bei jeder geeigneten Temperatur durchgeführt werden, beispielsweise 10 bis 60 °C.

Während Schritt (D) wird die Mischung bevorzugt permanent mit einem geeigneten Rührer, beispielsweise einem Teflonrührbalken oder einem Flügelrührer, gerührt.

In Schritt (D) des erfindungsgemäßen Verfahrens wird zum einen das Anlagerungsprodukt aus wenigstens einem Magnetpartikel und wenigstens einem ersten Stoff, und zum anderen eine an Anlagerungsprodukt verarmte Mischung M1 erhalten. Dies geschieht erfindungsgemäß dadurch, dass das magnetische Anlagerungsprodukt durch Anlegen eines magnetischen Feldes von der Mischung M1 abgetrennt wird. Da das Anlagerungsprodukt auf diese Weise abgetrennt wird, verarmt die flüssige Phase, d. h. nach Schritt (D) liegt in der flüssigen Phase weniger Anlagerungsprodukt vor als vor Schritt (D). Die Mischung M1 enthält im Allgemeinen den wenigstens einen ersten Stoff, der im ersten Trennungsschritt noch nicht abgetrennt worden ist, den wenigstens einen zweiten Stoff und wenigstens ein Dispersionsmittel.

In Schritt (D) kann das Anlagerungsprodukt im Allgemeinen durch alle dem Fachmann bekannten Verfahren abgetrennt werden. In einer Ausführungsform kann beispielsweise die Mischung M1 enthaltend das Dispersionsmittel, den wenigstens einen zweiten Stoff und noch nicht abgetrennten wenigstens einen ersten Stoff, durch ein Bodenventil aus dem für Schritt (D) benutzten Reaktor abgelassen werden, oder die nicht durch den mindestens einen Magneten festgehaltenen Anteile der Suspension werden durch einen Schlauch abgepumpt. Die Menge an wenigstens einem ersten Stoff in Mischung M1 beträgt mindestens noch 0,1 Gew.-%.

### Schritt (E):

Schritt (E) des erfindungsgemäßen Verfahrens umfasst das erneute Inkontaktbringen von Mischung M1 aus Schritt (D) mit wenigstens einer oberflächenaktiven Substanz, wobei die oberflächenaktive Substanz an den wenigstens einen ersten Stoff, der in Mischung M1 aus Schritt (D) noch vorhanden ist, anbindet.

Die in Schritt (D) erhaltene Mischung M1 enthält unter anderem noch Teile des wenigstens einen ersten Stoffes, der durch das erfindungsgemäße Verfahren abgetrennt werden soll. Da aber im Allgemeinen die Abtrennung des wenigstens einen ersten Stoffes in Schritt (D) nicht vollständig verläuft, liegt in Mischung M1 noch erster Stoff vor, der in den folgenden Schritten, möglichst vollständig, abgetrennt werden soll. Daher wird die Mischung M1 erfindungsgemäß erneut mit mindestens einer oberflächenaktiven Substanz in Kontakt gebracht.

In Schritt (E) des erfindungsgemäßen Verfahrens können im Allgemeinen oberflächenaktive Substanzen eingesetzt werden, die aus der bezüglich Schritt (A) genannten Gruppe stammen. Die oberflächenaktiven Substanzen in den Schritten (A) und (E) können gleich oder unterschiedlich sein.

Daher betrifft die vorliegende Erfindung das erfindungsgemäße Verfahren, wobei die oberflächenaktiven Substanzen in den Schritten (A) und (E) identisch sind.

Des Weiteren betrifft die vorliegende Erfindung das erfindungsgemäße Verfahren, wobei die oberflächenaktiven Substanzen in den Schritten (A) und (E) unterschiedlich sind.

In Schritt (E) des erfindungsgemäßen Verfahrens sind ganz besonders bevorzugte oberflächenaktive Substanzen C₂-C₂₀-Kaliumxanthate, Thiole, Thiocarbamate, Hydroxamate oder eine Verbindung der folgenden Formel (IV)

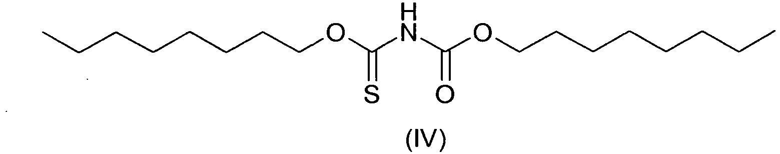

Das Inkontaktbringen in Schritt (E) des erfindungsgemäßen Verfahrens kann durch alle dem Fachmann bekannte Verfahren geschehen. Da in Schritt (E) die Mischung M1 behandelt wird, liegt im Allgemeinen noch das Dispersionsmittel aus den vorangegangenen Schritten vor, so dass Schritt (E) im Allgemeinen in Dispersion, bevorzugt in Suspension, besonders bevorzugt in wässriger Suspension, durchgeführt wird.

Schritt (E) des erfindungsgemäßen Verfahrens wird im Allgemeinen bei einer Temperatur von 1 bis 80 °C, bevorzugt bei 20 bis 40 °C, besonders bevorzugt bei Umgebungstemperatur durchgeführt.

Die wenigstens eine oberflächenaktive Substanz wird in Schritt (E) im Allgemeinen in einer geringeren Menge als in Schritt (A) des erfindungsgemäßen Verfahrens eingesetzt. In einer bevorzugten Ausführungsform wird die wenigstens eine oberflächenaktive Substanz in Schritt (E) in einer Menge von 20 bis 300 g / t, besonders bevorzugt 40 bis 100 g / t, jeweils bezogen auf die gesamte zu behandelnde Mischung, eingesetzt.

### Schritt (F):

Schritt (F) des erfindungsgemäßen Verfahrens umfasst das Behandeln der Dispersion aus Schritt (E) mit wenigstens einem hydrophoben Magnetpartikel, so dass sich der wenigstens eine erste Stoff, an den die wenigstens eine oberflächenaktive Substanz angebunden ist, und der wenigstens eine Magnetpartikel anlagern.

In Schritt (F) erfolgt die Anlagerung des wenigstens einen Magnetpartikel an den wenigstens einen ersten Stoff, an den die wenigstens eine oberflächenaktive Substanz angebunden ist, so dass ein entsprechendes magnetisches Anlagerungsprodukt entsteht, welches im weiteren Verlauf des erfindungsgemäßen Verfahrens durch Anlegen eines magnetischen Feldes abgetrennt werden kann.

Im Prinzip kann Schritt (F) des erfindungsgemäßen Verfahrens analog zu Schritt (C) des erfindungsgemäßen Verfahrens erfolgen. Die bezüglich Schritt (C) genannten Details und bevorzugten Ausführungsformen gelten somit auch für den erfindungsgemäßen Schritt (F).

Der wenigstens eine Magnetpartikel kann aus der bezüglich Schritt (C) genannten Gruppe ausgewählt werden. In einer Ausführungsform des erfindungsgemäßen Verfahrens sind die Magnetpartikel in den Schritten (C) und (F) identisch. In einer weiteren Ausführungsform des erfindungsgemäßen Verfahrens sind die Magnetpartikel in den Schritten (C) und (F) unterschiedlich.

Im Allgemeinen wird so viel Magnetpartikel in Schritt (F) zugegeben, dass eine möglichst vollständige Abtrennung des noch verbliebenen wenigstens einen ersten Stoffes erfolgt. In einer bevorzugten Ausführungsform wird in Schritt (F) die gleiche Menge an Magnetpartikel wie in Schritt (C) zugegeben.

### Schritt (G):

Schritt (G) des erfindungsgemäßen Verfahrens umfasst das Abtrennen des Anlagerungsproduktes aus Schritt (F) von der Mischung durch Anlegen eines magnetischen Feldes, um das Anlagerungsprodukt und eine an Anlagerungsprodukt verarmte Mischung M2 zu erhalten. Die Mischung M2 enthält gegebenenfalls noch wenigstens einen ersten Stoff, falls dieser in den vorherigen Schritten nicht nahezu vollständig abgetrennt worden ist, den wenigstens einen zweiten Stoff und Dispersionsmittel.

Im Prinzip kann Schritt (G) des erfindungsgemäßen Verfahrens analog zu Schritt (D) des erfindungsgemäßen Verfahrens erfolgen. Die bezüglich Schritt (D) genannten Details und bevorzugten Ausführungsformen gelten somit auch für den erfindungsgemäßen Schritt (G).

Gegenüber den Verfahren des Standes der Technik weist das erfindungsgemäße Verfahren den Vorteil auf, dass es durch das mehrstufige Konditionieren und Abtrennen des wenigstens einen ersten Stoffes aus der erfindungsgemäß zu behandelnden Mischung möglich ist, in Summe weniger oberflächenaktive Substanz zur Konditionierung des wenigstens einen ersten Stoffes einsetzten.zu müssen, um den gleichen Anteil an wenigstens einen ersten Stoff abtrennen zu können. Des Weiteren ist es möglich, durch das erfindungsgemäße Verfahren einen größeren Anteil an wenigstens einem ersten Stoff aus der Mischung abzutrennen, setzt man in Summe eine gleiche Menge an oberflächenaktiver Substanz zur Konditionierung ein. Somit gelingt es durch das erfindungsgemäße Verfahren, aus einer entsprechenden Mischung wenigstens einen ersten Stoff effizienter und vollständiger abtrennen zu können, als es durch die Verfahren des Standes der Technik möglich ist.

### Schritt (H):

Der optionale Schritt (H) des erfindungsgemäßen Verfahrens umfasst das Wiederholen der Schritte (E) bis (G), d. h. es ist erfindungsgemäß möglich, das Behandeln des Rückstandes mit wenigstens einer oberflächenaktiven Substanz, das Inkontaktbringen mit einem Magnetpartikel zur Ausbildung eines Anlagerungsproduktes und das Abtrennen dieses Anlagerungsproduktes durch Anlegen eines magnetischen Feldes nach Schritt (G) zu wiederholen, d. h. die Mischungen, die nach Abtrennen der Anlagerungsprodukte aus wenigstens einem ersten Stoff und Magnetpartikel erhalten werden, werden ein bzw. mehrerer weitere(s) Mal(e) mit jeweils wenigstens einer oberflächenaktiven Substanz behandelt, damit gegebenenfalls noch nicht abgetrennter erster Stoff hydrophobisiert und an einen Magnetpartikel angelagert wird.

### Schritt (I):

In einer bevorzugten Ausführungsform umfasst das erfindungsgemäße Verfahren den folgenden Schritt (I):

Der optionale Schritt (I) des erfindungsgemäßen Verfahrens umfasst das Spalten des abgetrennten Anlagerungsproduktes aus Schritt (D) und (G), um den wenigstens einen ersten Stoff und den wenigstens einen Magnetpartikel separat zu erhalten.

In einer bevorzugten Ausführungsform des erfindungsgemäßen Verfahrens erfolgt das Spalten in Schritt (I) nicht zerstörerisch, d.h. dass die in der Dispersion vorliegenden Einzelkomponenten chemisch nicht verändert werden. Beispielsweise erfolgt die erfindungsgemäße Spaltung nicht durch Oxidation des Hydrophobierungsmittels, beispielsweise unter Erhalt der Oxidationsprodukte oder von Abbauprodukten des Hydrophobierungsmittels.

Das Spalten kann nach allen dem Fachmann bekannten Verfahren erfolgen, die dazu geeignet sind, das Anlagerungsprodukt derart zu spalten, dass der wenigstens eine magnetische Partikel in wieder einsetzbarer Form zurück gewonnen werden kann. In einer bevorzugten Ausführungsform wird der abgespaltene Magnetpartikel wieder in Schritt (C) oder (F) eingesetzt.

In einer bevorzugten Ausführungsform erfolgt das Spalten in Schritt (I) des erfindungsgemäßen Verfahrens durch Behandlung des Anlagerungsproduktes mit einer Substanz ausgewählt aus der Gruppe bestehend aus organischen Lösungsmitteln, basischen Verbindungen, sauren Verbindungen, Oxidationsmitteln, Reduktionsmitteln, oberflächenaktiven Verbindungen und Mischungen davon.

Beispiele für geeignete organische Lösungsmittel sind Methanol, Ethanol, Propanol, beispielsweise n-Propanol oder iso-Propanol, aromatische Lösungsmittel, beispielsweise Benzol, Toluol, Xylole, Ether, beispielsweise Diethylether, Methyl-t-butyl-ether, Ketone, beispielsweise Aceton, aromatische oder aliphatische Kohlenwasserstoffe, beispielsweise gesättigte Kohlenwasserstoffe mit beispielsweise 8 bis 16 Kohlenstoffatomen, beispielsweise Dodecan und/oder Shellsol®, Dieselkraftstoffe und Mischungen davon. Die Hauptbestandteile des Dieselkraftstoffes sind vorwiegend Alkane, Cycloalkane und aromatische Kohlenwasserstoffe mit etwa 9 bis 22 KohlenstoffAtomen pro Molekül und einem Siedebereich zwischen 170 °C und 390 °C.

Beispiele für erfindungsgemäß einsetzbare basische Verbindungen sind wässrige Lösungen basischer Verbindungen, beispielsweise wässrige Lösungen von Alkali- und/oder Erdalkalihydroxiden, beispielsweise KOH, NaOH, Kalkmilch, wässrige Ammoniaklösungen, wässrige Lösungen organischer Amine der allgemeinen Formel R²₃N, wobei R² unabhängig voneinander ausgewählt ist aus der Gruppe bestehend aus C₁-C₈-Alkyl, gegebenenfalls substituiert mit weiteren funktionellen Gruppen. In einer bevorzugten Ausführungsform erfolgt Schritt (I) durch Zugabe von wässriger NaOH-Lösung bis zu einem pH-Wert von 13, beispielsweise für die Abtrennung von mit OPS modifiziertem Cu₂S. Die sauren Verbindungen können mineralische Säuren sein, beispielsweise HCl, H₂SO₄, HNO₃ oder Mischungen davon, organische Säuren, beispielsweise Carbonsäuren. Als Oxidationsmittel kann beispielsweise H₂O₂ eingesetzt werden, beispielsweise als 30 gew.-%ige wässrige Lösung (Perhydrol). Für die Abtrennung von mit Thiolen modifiziertem Cu₂S wird bevorzugt H₂O₂ oder Na₂S₂O₄ eingesetzt.

Beispiele für erfindungsgemäß einsetzbare oberflächenaktive Verbindungen sind nichtionische, anionische, kationische und/oder zwitterionische Tenside.

In einer bevorzugten Ausführungsform wird das Anlagerungsprodukt aus hydrophoben Stoff und magnetischem Teilchen mit einem organischen Lösungsmittel, besonders bevorzugt mit Aceton und/oder Diesel, gespalten. Dieser Vorgang kann auch mechanisch unterstützt werden. In einer bevorzugten Ausführungsform wird Ultraschall zur Unterstützung des Spaltungsvorgangs eingesetzt.

Im Allgemeinen wird das organische Lösungsmittel in einer Menge verwendet, die ausreicht, um möglichst das gesamte Anlagerungsprodukt zu spalten. In einer bevorzugten Ausführungsform werden 20 bis 100 ml des organischen Lösungsmittels pro Gramm zu spaltendem Anlagerungsprodukt aus hydrophobem Stoff und magnetischem Partikel verwendet.

Erfindungsgemäß liegt nach der Spaltung der wenigstens eine erste Stoff und der wenigstens eine Magnetpartikel als Dispersion in dem genannten Spaltungsreagenz, bevorzugt einem organischen Lösungsmittel, vor.

Der wenigstens eine Magnetpartikel wird aus der Dispersion enthaltend diesen wenigstens einen Magnetpartikel und den wenigstens einen ersten Stoff durch einen permanenten oder schaltbaren Magneten von der Lösung abgetrennt. Details dieses Abtrennens sind analog zu Schritt (D) oder (G) des erfindungsgemäßen Verfahrens.

Bevorzugt wird der abzutrennende erste Stoff, bevorzugt die abzutrennende Metallverbindung, von dem organischen Lösungsmittel durch Abdestillieren des organischen Lösungsmittels getrennt. Der so erhältliche erste Stoff kann durch weitere, dem Fachmann bekannte Verfahren gereinigt werden. Das Lösungsmittel kann, gegebenenfalls nach Aufreinigung, wieder in das erfindungsgemäße Verfahren zurückgeführt werden.

### Beispiele

### Erfindungsgemäßes Beispiel:

Es werden 100 g eines porphyrischen Erzes (Cu-Anteil von 0,7 Gew.-%) mit 20 g Wasser und 130 g / t Octylxanthat für 5 min. in einer Planetenkugelmühle vermahlen. Anschließend wird der Mischung 3 g mit Octylphosphonsäure hydrophobisierter Magnetit (Fe₃O₄ mit einem Durchmesser von 1 bis 5 µm) zugegeben und weitere 5 min. in der Kugelmühle gemahlen. Dann wird das entstandene Gemisch mit 100 mL Wasser versetzt. Durch eine magnetische Trennung in einer magnetischen Trennapparatur, die dem Fachmann bekannt ist, werden die magnetischen Bestandteile von den unmagnetischen Bestandteilen abgetrennt. Der magnetische Rückstand wird getrocknet und enthält laut Analyse 69,5 % des Kupfers.

Die abgetrennten unmagnetischen Bestandteile werden mit 60 g / t Octylxanthat in einem Rührbehälter für 5 min. (200 U / min.) vermengt, und es werden wieder 3 g mit Octylphosphonsäure hydrophobisierter Magnetit (Fe₃O₄ mit einem Durchmesser von 1 bis 5 µm) zugegeben und erneut 5 min. in einer Rührapparatur (200 U / min.) behandelt. Anschließend werden die magnetischen Bestandteile in einer magnetischen Trennapparatur von den unmagnetischen Bestandteilen abgetrennt. Bei diesem zweiten Trennschritt werden weitere 22,8 % des Cu magnetisch abgetrennt, so dass insgesamt 92,3 % des Kupfers magnetisch aus dem Gestein abgetrennt werden. Insgesamt werden dazu 190 g / t Xanthat als Hydrophobisierungsmittel benötigt.

### Vergleichsbeispiel:

Das Verfahren wird gemäß dem erfindungsgemäßen Beispiel wiederholt, wobei aber die gesamte Menge von 190 g / t Octylxänthat komplett schon bei der ersten Konditionierung eingesetzt werden, und kein zweiter Konditionierungsschritt durchgeführt wird. Die Ausbeute an Cu beträgt 70 % des in dem porphyrischen Erz vorhandenen Cu.

## Patentansprüche

1. Verfahren zum Abtrennen wenigstens eines ersten Stoffes aus einer Mischung enthaltend diesen wenigstens einen ersten Stoff und wenigstens einen zweiten Stoff, wenigstens umfassend die folgenden Schritte:
(A) Inkontaktbringen der Mischung enthaltend wenigstens einen ersten Stoff und wenigstens einen zweiten Stoff mit wenigstens einer oberflächenaktiven Substanz, gegebenenfalls in Gegenwart wenigstens eines Dispersionsmittels, wobei die oberflächenaktive Substanz an den wenigstens einen ersten Stoff anbindet,
(B) gegebenenfalls Zugabe wenigstens eines Dispersionsmittels zu der in Schritt (A) erhaltenen Mischung, um eine Dispersion zu erhalten,
(C) Behandeln der Dispersion aus Schritt (A) oder (B) mit wenigstens einem hydrophoben Magnetpartikel, so dass sich der wenigstens eine erste Stoff, an den die wenigstens eine oberflächenaktive Substanz angebunden ist, und der wenigstens eine Magnetpartikel anlagern,
(D) Abtrennen des Anlagerungsproduktes aus Schritt (C) von der Mischung durch Anlegen eines magnetischen Feldes, um das Anlagerungsprodukt und eine an Anlagerungsprodukt verarmte Mischung M1 zu erhalten,
(E) erneutes Inkontaktbringen von Mischung M1 aus Schritt (D) mit wenigstens einer oberflächenaktiven Substanz, wobei die oberflächenaktive Substanz an den wenigstens einen ersten Stoff, der in Mischung M1 aus Schritt (D) noch vorhanden ist, anbindet,
(F) Behandeln der Dispersion aus Schritt (E) mit wenigstens einem hydrophoben Magnetpartikel, so dass sich der wenigstens eine erste Stoff, an den die wenigstens eine oberflächenaktive Substanz angebunden ist, und der wenigstens eine Magnetpartikel anlagern,
(G) Abtrennen des Anlagerungsproduktes aus Schritt (F) von der Mischung durch Anlegen eines magnetischen Feldes, um das Anlagerungsprodukt und eine an Anlagerungsprodukt verarmte Mischung M2 zu erhalten und
(H) gegebenenfalls Wiederholen der Schritte (E) bis (G).

2. Verfahren nach Anspruch 1, **dadurch gekennzeichnet, dass** es den folgenden Schritt (I) umfasst
(I) Spalten des abgetrennten Anlagerungsproduktes aus Schritt (D) und (G), um den wenigstens einen ersten Stoff und den wenigstens einen Magnetpartikel separat zu erhalten.

3. Verfahren nach Anspruch 1 oder 2, **dadurch gekennzeichnet, dass** der erste Stoff eine hydrophobe Metallverbindung oder Kohle und der zweite Stoff eine hydrophile Metallverbindung ist.

4. Verfahren nach einem der Ansprüche 1 bis 3, **dadurch gekennzeichnet, dass** die oberflächenaktive Substanz eine Substanz der allgemeinen Formel (I)
A-Z (I)
ist, worin
A ausgewählt ist aus linearem oder verzweigtem C₃-C₃₀-Alkyl, C₃-C₃₀-Heteroalkyl, gegebenenfalls substituiertes C₆-C₃₀-Aryl, gegebenenfalls substituiertes C₆-C₃₀-Heteroalkyl, C₆-C₃₀-Aralkyl und
Z eine Gruppe ist, mit der die Verbindung der allgemeinen Formel (I) an den wenigstens einen hydrophoben Stoff anbindet.

5. Verfahren nach Anspruch 4, **dadurch gekennzeichnet, dass** Z ausgewählt aus der Gruppe bestehend aus anionischen Gruppen -(X)ₙ-PO₃²⁻, -(X)ₙ-PO₂S²⁻, -(X)ₙ-POS₂²⁻, -(X)ₙ-PS₃²⁻, -(X)ₙ-PS₂⁻, -(X)ₙ-POS⁻, -(X)ₙ-PO₂⁻, -(X)ₙ-PO₃²⁻ -(X)ₙ-CO₂⁻,-(X)ₙ-CS₂⁻ , -(X)ₙ-COS⁻, -(X)ₙ-C(S)NHOH, -(X)ₙ-S⁻ mit X ausgewählt aus der Gruppe bestehend aus O, S, NH, CH₂ und n = 0, 1 oder 2, mit gegebenenfalls Kationen ausgewählt aus der Gruppe bestehen aus Wasserstoff, NR₄⁺ mit R gleich unabhängig voneinander Wasserstoff und/oder C₁-C₈-Alkyl, Alkali- oder Erdalkalimetallen.

6. Verfahren nach einem der Ansprüche 3 bis 5, **dadurch gekennzeichnet, dass** die wenigstens eine hydrophobe Metallverbindung ausgewählt ist aus der Gruppe der sulfidischen Erze, der oxidischen und/oder carbonathaltigen Erze.

7. Verfahren nach einem der Ansprüche 3 bis 6, **dadurch gekennzeichnet, dass** die wenigstens eine hydrophile Metallverbindung ausgewählt ist aus der Gruppe bestehend aus oxidischen und hydroxidischen Metallverbindungen.

8. Verfahren nach einem der Ansprüche 1 bis 7, **dadurch gekennzeichnet, dass** der wenigstens eine Magnetpartikel ausgewählt ist aus der Gruppe bestehend aus magnetischen Metallen und Mischungen davon, ferromagnetischen Legierungen von magnetischen Metallen und Mischungen davon, magnetischen Eisenoxiden, kubischen Ferriten der allgemeinen Formel (II)
M²⁺ₓFe²⁺₁₋ₓFe³⁺₂O₄ (II)
mit
M ausgewählt aus Co, Ni, Mn, Zn und Mischungen davon und
x ≤ 1,
hexagonalen Ferriten und Mischungen davon.

9. Verfahren nach einem der Ansprüche 1 bis 8, **dadurch gekennzeichnet, dass** das Dispersionsmittel Wasser ist.

10. Verfahren nach einem der Ansprüche 1 bis 9, **dadurch gekennzeichnet, dass** die Mischung enthaltend wenigstens einen ersten Stoff und wenigstens einen zweiten Stoff vor oder während Schritt (A) zu Partikeln mit einer Größe von 100 nm bis 100 µm vermahlen wird.

11. Verfahren nach einem der Ansprüche 1 bis 10, **dadurch gekennzeichnet, dass** die oberflächenaktiven Substanzen in den Schritten (A) und (E) identisch sind.

12. Verfahren nach einem der Ansprüche 1 bis 10, **dadurch gekennzeichnet, dass** die oberflächenaktiven Substanzen in den Schritten (A) und (E) unterschiedlich sind.

## Claims

1. A process for separating at least one first material from a mixture comprising this at least one first material and at least one second material, which comprises at least the following steps:
(A) contacting of the mixture comprising at least one first material and at least one second material with at least one surface-active substance, optionally in the presence of at least one dispersion medium, with the surface-active substance binding to the at least one first material,
(B) optionally addition of at least one dispersion medium to the mixture obtained in step (A) in order to obtain a dispersion,
(C) treatment of the dispersion from step (A) or (B) with at least one hydrophobic magnetic particle so that the at least one first material to which the at least one surface-active substance is bound and the at least one magnetic particle agglomerate,
(D) separation of the agglomerate from step (C) from the mixture by application of a magnetic field in order to obtain the agglomerate and a mixture M1 depleted in agglomerate,
(E) renewed contacting of the mixture M1 from step (D) with at least one surface-active substance, with the surface-active substance binding to the at least one first material which is still present in the mixture M1 from step (D),
(F) treatment of the dispersion from step (E) with at least one hydrophobic magnetic particle so that the at least one first material to which the at least one surface-active substance is bound and the at least one magnetic particle agglomerate,
(G) separation of the agglomerate from step (F) from the mixture by application of a magnetic field in order to obtain the agglomerate and a mixture M2 depleted in agglomerate and
(H) optionally repetition of the steps (E) to (G).

2. The process according to claim 1, which comprises the step (I)
(I) dissociation of the agglomerate which has been separated off in steps (D) and (G) in order to obtain the at least one first material and the at least one magnetic particle separately.

3. The process according to claim 1 or 2, wherein the first material is a hydrophobic metal compound or coal and the second material is a hydrophilic metal compound.

4. The process according to any of claims 1 to 3, wherein the surface-active substance is a substance of the general formula (I)
A-Z (I)
where
A is selected from among linear or branched C₃-C₃₀-alkyl, C₃-C₃₀-heteroalkyl, optionally substituted C₆-C₃₀-aryl, optionally substituted C₆-C₃₀-heteroalkyl, C₆-C₃₀-aralkyl and
Z is a group by means of which the compound of the general formula (I) binds to the at least one hydrophobic material.

5. The process according to claim 4, wherein Z is selected from the group consisting of anionic groups -(X)ₙ-PO₃²⁻, -(X)ₙ-PO₂S²⁻, -(X)ₙ-POS₂²⁻, -(X)ₙ-PS₃²⁻, -(X)ₙ-PS₂⁻, -(X)ₙ-POS⁻, -(X)ₙ-PO₂⁻, -(X)ₙ-PO₃²⁻-(X)ₙ-CO₂⁻, -(X)ₙ-CS₂⁻, -(X)ₙ-COS⁻, - (X) ₙ-C (S) NHOH, -(X)ₙ-S⁻ where X is selected from the group consisting of O, S, NH, CH₂ and n = 0, 1 or 2, optionally with cations selected from the group consisting of hydrogen, NR₄⁺ where the radicals R are each, independently of one another, hydrogen and/or C₁-C₈-alkyl, an alkali metal or alkaline earth metal.

6. The process according to any of claims 3 to 5, wherein the at least one hydrophobic metal compound is selected from the group consisting of sulfidic ores, oxidic and/or carbonate-comprising ores.

7. The process according to any of claims 3 to 6, wherein the at least one hydrophilic metal compound is selected from the group consisting of oxidic and hydroxidic metal compounds.

8. The process according to any of claims 1 to 7, wherein the at least one magnetic particle is selected from the group consisting of magnetic metals and mixtures thereof, ferromagnetic alloys of magnetic metals and mixtures thereof, magnetic iron oxides, cubic ferrites of the general formula (II)
M²⁺ₓFe²⁺₁₋ₓFe³⁺₂O₄ (II)
where
M is selected from among Co, Ni, Mn, Zn and mixtures thereof and
x ≤ 1,
hexagonal ferrites and mixtures thereof.

9. The process according to any of claims 1 to 8, wherein the dispersion medium is water.

10. The process according to any of claims 1 to 9, wherein the mixture comprising at least one first material and at least one second material is milled to particles having a size of from 100 nm to 100 µm before or during step (A).

11. The process according to any of claims 1 to 10, wherein the surface-active substances in steps (A) and (E) are identical.

12. The process according to any of claims 1 to 10, wherein the surface-active substances in steps (A) and (E) are different.

## Revendications

1. Procédé pour séparer au moins une première substance d'un mélange contenant cette au moins une première substance et au moins une deuxième substance, comprenant au moins les étapes suivantes :
(A) mise en contact du mélange contenant au moins une première substance et au moins une deuxième substance avec au moins une substance tensioactive, le cas échéant en présence d'au moins un dispersant, la substance tensioactive se liant à ladite au moins une première substance,
(B) le cas échéant addition d'au moins un dispersant au mélange obtenu dans l'étape (A), pour obtenir une dispersion,
(C) traitement de la dispersion de l'étape (A) ou (B) par au moins une particule magnétique hydrophobe, de manière telle que ladite au moins une première substance, à laquelle ladite au moins une substance tensioactive est liée, et ladite au moins une particule magnétique s'additionnent,
(D) séparation du produit d'addition de l'étape (C) du mélange par application d'un champ magnétique, pour obtenir le produit d'addition et un mélange M1 appauvri en produit d'addition,
(E) nouvelle mise en contact du mélange M1 de l'étape (D) avec au moins une substance tensioactive, la substance tensioactive se liant à ladite au moins une première substance, qui est encore présente dans le mélange M1 de l'étape (D),
(F) traitement de la dispersion de l'étape (E) par au moins une particule magnétique hydrophobe, de manière telle que ladite au moins une première substance, à laquelle ladite au moins une substance tensioactive est liée, et ladite au moins une particule magnétique s'additionnent,
(G) séparation du produit d'addition de l'étape (F) du mélange par application d'un champ magnétique, pour obtenir le produit d'addition et un mélange M2 appauvri en produit d'addition,
(H) le cas échéant répétition des étapes (E) à (G).

2. Procédé selon la revendication 1, **caractérisé en ce qu'**il comprend l'étape suivante (I) (I) dissociation du produit d'addition séparé de l'étape (D) et (G), pour obtenir ladite au moins une première substance et ladite au moins une particule magnétique séparément.

3. Procédé selon la revendication 1 ou 2, **caractérisé en ce que** la première substance est un composé métallique hydrophobe ou du charbon et la deuxième substance est un composé métallique hydrophile.

4. Procédé selon l'une quelconque des revendications 1 à 3, **caractérisé en ce que** la substance tensioactive est une substance de formule générale (I)
A-Z (I)
dans laquelle
A est choisi parmi C₃-C₃₀-alkyle linéaire ou ramifié, C₃-C₃₀-hétéroalkyle, C₆-C₃₀-aryle le cas échéant substitué, C₆-C₃₀-hétéroalkyle le cas échéant substitué, C₆-C₃₀-aralkyle et
Z est un groupe avec lequel le composé de formule générale (I) se lie à ladite au moins une substance hydrophobe.

5. Procédé selon la revendication 4, **caractérisé en ce que** Z est choisi dans le groupe constitué par les groupes anioniques -(X)ₙ-PO₃²⁻, -(X)ₙ-PO₂S²⁻, -(X)ₙ-POS₂²⁻, -(X)ₙ-PS₃²⁻, -(X)ₙ-PS₂⁻, -(X)ₙ-POS⁻, -(X)ₙ-PO₂⁻, -(X)ₙ-PO₃²⁻, -(X)ₙ-CO₂⁻, -(X)ₙ-PS₂⁻, -(X)ₙ-COS⁻, -(X)ₙ-C(S)NHOH, -(X)ₙ-S⁻, X étant choisi dans le groupe constitué par 0, S, NH, CH₂ et n = 0, 1 ou 2, avec le cas échéant des cations choisis dans le groupe constitué par l'hydrogène, NR₄⁺ avec R représentant, indépendamment l'un de l'autre, hydrogène et/ou C₁-C₈-alkyle, des métaux alcalins ou alcalino-terreux.

6. Procédé selon l'une quelconque des revendications 3 à 5, **caractérisé en ce que** ledit au moins un composé métallique hydrophobe est choisi dans le groupe constitué par les minerais de type sulfure, les minerais de type oxyde et/ou les minerais contenant du carbonate.

7. Procédé selon l'une quelconque des revendications 3 à 6, **caractérisé en ce que** ledit au moins un composé métallique hydrophile est choisi dans le groupe constitué par les composés métalliques de type oxyde et hydroxyde.

8. Procédé selon l'une quelconque des revendications 1 à 7, **caractérisé en ce que** ladite au moins une particule magnétique est choisie dans le groupe constitué par les métaux magnétiques et leurs mélanges, les alliages ferromagnétiques de métaux magnétiques et leurs mélanges, les oxydes de fer magnétiques, les ferrites cubiques de formule générale (II)
M²⁺ₓFe²⁺₁₋ₓFe³⁺₂O₄ (II)
où
M est choisi parmi Co, Ni, Mn, Zn et leurs mélanges et
x ≤ 1,
les ferrites hexagonales et leurs mélanges.

9. Procédé selon l'une quelconque des revendications 1 à 8, **caractérisé en ce que** le dispersant est l'eau.

10. Procédé selon l'une quelconque des revendications 1 à 9, **caractérisé en ce que** le mélange contenant au moins une première substance et au moins une deuxième substance est broyé avant ou pendant l'étape (A) en particules présentant une grosseur de 100 nm à 100 µm.

11. Procédé selon l'une quelconque des revendications 1 à 10, **caractérisé en ce que** les substances tensioactives dans les étapes (A) et (E) sont identiques.

12. Procédé selon l'une quelconque des revendications 1 à 10, **caractérisé en ce que** les substances tensioactives dans les étapes (A) et (E) sont différentes.
